# FASCICULE DE BREVET EUROPEEN

(11) **EP 0 780 100 B1**
(45) Date de publication et mention de la délivrance du brevet: **31.07.2002**
(21) Numéro de dépôt: 96105243.8
(22) Date de dépôt: 02.04.1996
(51) Int. Cl.: A61C 5/02

(54) **Instrument pour l'alésage des canaux radiculaires dentaires**
Instrument zur Bearbeitung von Zahnwurzelkanälen
Instrument for the preparation of dental root canals

(30) Priorité: 20.12.1995 CH 360495
(43) Date de publication de la demande: 25.06.1997
(73) Titulaire: MAILLEFER INSTRUMENTS S.A., CH-1338 Ballaigues (CH)
(72) Inventeur: Maillefer, Pierre-Luc, 1338 Ballaigues (CH); Aeby, Francois, 1442 Montagny-Pres-Yverdon (CH)
(74) Mandataire: Micheli & Cie

(56) Documents cités:
- EP-A- 0 501 255
- EP-A- 0 684 019
- US-A- 5 380 200

## Description

La présente invention a pour objet un instrument pour l'alésage des canaux radiculaires dentaires comprenant une tige effilée présentant, sur au moins une partie de sa longueur, constituant sa partie active, au moins une arête hélicoïdale de coupe.

L'alésage des canaux radiculaires dentaires comporte une première étape, dite de cathétérisme, qui consiste à engager dans le canal radiculaire un instrument très fin, jusqu'au foramen apical. Cette opération est toujours réalisée manuellement.

L'élargissement du canal radiculaire s'effectue en plusieurs opérations qui peuvent être réalisées soit manuellement, soit au moyen d'instruments entraînés mécaniquement. Pour cette seconde étape, deux méthodes peuvent être utilisées : la première, dite "step back", consiste à faire passer dans le canal une succession d'instruments dont le diamètre va en croissant, en réduisant la longueur alésée à chaque augmentation de diamètre. Ce mode de faire est relativement long et ne permet pas au praticien d'observer, dans la mesure du possible, le travail effectué. La seconde méthode, dite "crown-down, consiste à ouvrir, dans un premier temps, la partie coronaire de la dent puis à pénétrer, au moyen d'une série d'instruments de plus en plus fins, jusqu'à la zone apicale.
Les jeux d'instruments connus permettant la mise en oeuvre de ce processus qui sont montés le plus généralement sur un contre-angle tournant à faible vitesse (250 à 500 t/min.) et qui sont réalisés, le plus souvent, en un alliage nickel-titane, appartiennent à quatre familles :
La première famille comprend une série d'instruments constitués d'une partie coupante courte, suivie d'un col fin et flexible, lui-même raccordé à un manche qui se fixe dans une pièce à main assurant l'entraînement mécanique de l'instrument. Le diamètre de la partie active croît en progression arithmétique, l'intervalle entre deux numéros étant de 0,025 mm.
Une deuxième famille se compose d'instruments dont la partie active, d'une longueur de 16 mm, possède une conicité de 0,04 mm par millimètre de longueur. Cette partie active est directement suivie d'une portion cylindrique servant de raccord au manche de l'instrument. La progression du diamètre à la pointe de l'extrémité active est de 29 % entre chaque numéro.
La troisième famille comprend des instruments de longueur active de 16 mm et d'enveloppe conique, ces instruments ayant tous le même diamètre à leur extrémité; leur conicité augmente de 0,05 mm à chaque numéro.

La dernière famille comprend des instruments tels que décrits dans le document EP 0 501 255. Ces instruments peuvent suivant une forme d'exécution décrite comporter une tige formée d'un corps de révolution dont la génératrice est une courbe concave.

Le but de l'invention est de fournir un instrument pour l'alésage des canaux radiculaires dentaires qui donne auxdits canaux une forme évasée, ne présentant aucune solution de continuité le long de leur surface, formant des "escaliers", comme c'est le cas lorsque les instruments connus, notamment les instruments dits du type de Gate, sont utilisés.

Ces buts sont atteints grâce aux moyens définis dans la revendication 1.

Le dessin représente, à titre d'exemple, une forme d'exécution de l'objet de l'invention.
La fig. 1 est une vue en élévation d'un instrument pour l'alésage des canaux radiculaires dentaires.
La fig. 2 représente le profil de cinq instruments pour l'alésage des canaux radiculaires dentaires appartenant à un jeu de tels instruments, et
La fig. 3 représente le profil superposé des cinq instruments de la fig. 2.

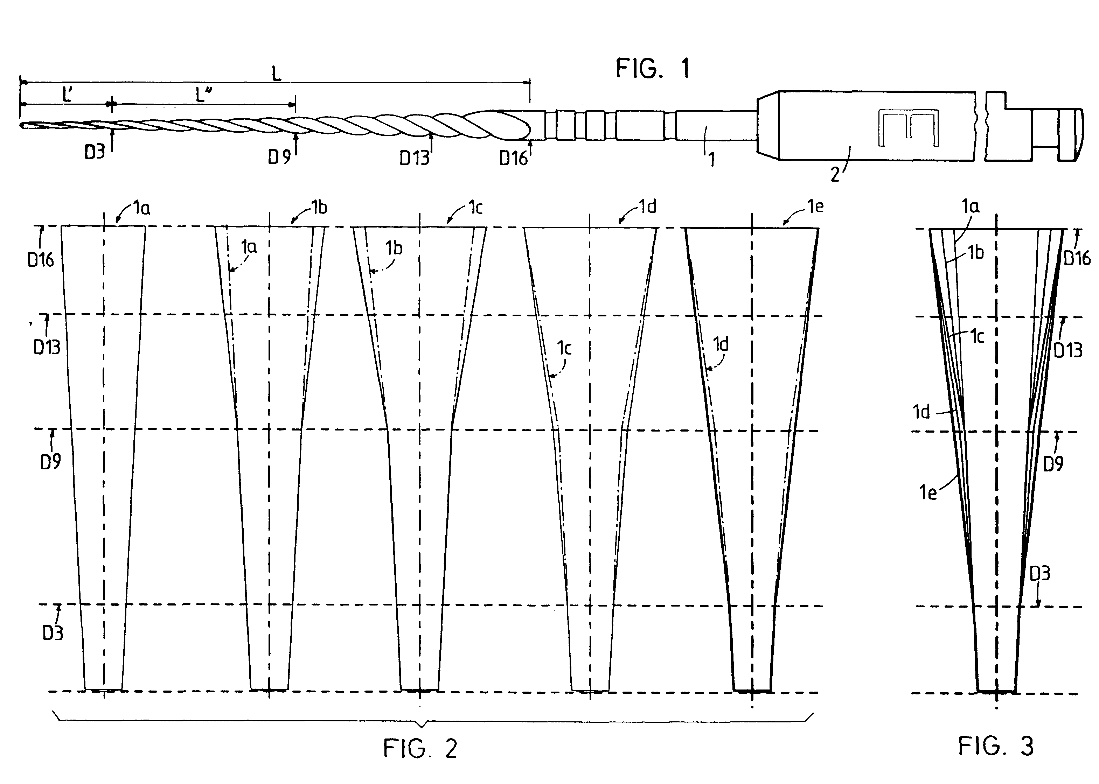

L'instrument représenté à la fig. 1 comprend une tige de section circulaire 1, en un alliage nickel-titane, emmanchée, à sa partie postérieure, dans un manche 2 destiné à s'engager dans une pièce d'angle assurant l'entraînement mécanique de l'instrument.

La tige 1 est effilée, sa partie antérieure, indiquée en L, présentant deux gorges hélicoîdales 3 à lèvres coupantes. A l'extrémité de l'instrument, sur une longueur indiquée par L', de 3mm environ, se terminant en un point indiqué par D₃, exprimant le diamètre de l'instrument en ce point, la lèvre coupante des gorges hélicoïdales 3 a été supprimée de façon que, sur cette longueur, l'instrument ne soit pas coupant et que les gorges n'aient pour effet que d'éliminer les déchets du matériau dentinaire détaché par l'instrument. Le nombre des gorges à arêtes coupantes pourra être supérieur à deux.

La conicité de la tige 1 de l'instrument représenté à la fig. 1 n'est pas constante mais varie en au moins un point de sa partie active, l'angle d'ouverture au sommet étant supérieur, à l'extrémité postérieure de l'instrument, à l'angle d'ouverture à sa partie antérieure. L'instrument va ainsi en s'évasant et est dit "en trompette".

Cependant, cette variation de conicité étant à peine visible à l'oeil nu, elle n'apparaît pas à la fig. 1 et il faut se référer aux figs. 2 et 3, dans lesquelles le diamètre des instruments a été exagéré par rapport à leur longueur, pour pouvoir la constater.

Concernant ces deux figures, il convient de relever que l'instrument suivant l'invention n'est pratiquement jamais utilisé seul mais qu'il est utilisé, en une succession de passes, avec d'autres instruments analogues, mais de dimensions différentes, dont l'ensemble forme un jeu. C'est la raison pour laquelle un tel jeu a été illustré.

Le premier instrument du jeu de la fig. 2, désigné par 1a, présente une variation de conicité à partir de son point D₉ situé à une distance L" du point D₃, de six mm, c'est-à-dire à une distance de 9 mm de sa pointe. Dès ce point D₉, la conicité de l'instrument augmente. L'instrument conserve cette nouvelle conicité jusqu'au point D₁₆ qui marque la fin de sa partie active L.

Le deuxième instrument du jeu de la fig. 2, désigné par 1b, se distingue du premier par le fait que l'angle d'ouverture de la conicité de sa partie située entre les points D₉ et D₁₆ augmente plus que pour l'instrument 1a.

Il en est de même du troisième instrument, désigné par 1c, du jeu de la fig. 2.

La différence de conicité de la partie postérieure de la longueur active des instruments, à partir de leur point D₉, apparaît clairement à la fig. 2 où le profil de l'instrument 1a a été indiqué en traits mixtes sur l'instrument 1b, et le profil de l'instrument 1b a été indiqué sur l'instrument 1c.

La figure 2 montre également que la conicité de la partie antérieure des instruments 1a, 1b et 1c, entre la pointe de ces instruments et leur diamètre D₉, est la même pour ces trois instruments.

Quant au quatrième instrument du jeu, désigné par 1d, la conicité de sa partie antérieure, avant le diamètre D₉, augmente par rapport à celle de l'instrument 1c. Il en est de même du cinquième et dernier instrument du jeu, désigné par 1e, dans lequel la conicité de ses parties antérieure et postérieure augmente par rapport à l'instrument 1c.

Ce jeu d'instruments permet au praticien qui a réalisé manuellement la première étape de l'alésage, dite de cathétérisme, consistant à engager dans le canal un instrument très fin, jusqu'au foramen apical, d'utiliser ensuite, successivement, les instruments 1a à 1e du jeu, entraînés mécaniquement, en commençant par l'instrument 1a et en terminant par l'instrument 1e.

Cette utilisation successive des différents instruments du jeu permet d'effectuer un travail progressif, chaque instrument élargissant une partie spécifique du canal radiculaire tout en étant guidé jusqu'à l'apex par sa partie terminale antérieure non coupante, ce qui permet d'éviter des déviations et des déports par rapport à la courbe naturelle du canal originel.

C'est la partie coronaire du canal qui est alésée la première, ce qui assure un dégagement optimal des débris dentinaires et des conditions de travail optimales pour l'instrument suivant. Incidemment, le risque d'infection par l'apport de tissu dentinaire carrié à l'apex est ainsi fortement réduit. Puis c'est la partie médiane de la dent qui est alésée et enfin sa partie apicale.

L'extrémité de la partie apicale n'est pas inutilement alésée grâce au fait que la pointe de l'instrument dont la conicité sera de 2% par exemple, sur une longueur de 3mm, est dépourvue d'arêtes coupantes.

Le présent instrument, à conicité variable, permet la réalisation d'un canal plus ouvert et surtout plus régulier, ce qui assure des conditions d'obturation du canal qui sont optimales. Le passage du dernier instrument 1e réalise un alésage de finition.

Le canal radiculaire ainsi alésé ne présente aucune solution de continuité le long de sa surface, formant des "escaliers", comme c'est le cas lorsque les instruments connus, notamment les instruments dits du type de Gate, sont utilisés.

Dans l'exemple décrit et représenté, la conicité des instruments du jeu ne varie qu'en un seul point, à la hauteur du diamètre D₉. On pourra cependant prévoir le cas où la conicité variera en plus d'un point, par exemple à la hauteur du diamètre D₉ et du diamètre D₁₃ situé à 13 mm de la pointe de l'instrument.

Dans la pratique, la conicité de la partie antérieure de l'instrument, située en avant du diamètre D₉ de celui-ci, sera de l'ordre de 2%, la conicité de la partie postérieure pouvant aller de 4,5 à près de 6%.

## Revendications

1. Instrument pour l'alésage de canaux radiculaires dentaires comprenant une tige effilée (1) présentant sur au moins une partie de sa longueur (L), constituant sa partie active, au moins une arête hélicoïdale de coupe, cette tige (1) présentant une pointe et une conicité dont l'angle d'ouverture est supérieur, dans sa partie postérieure (D₉ - D₁₆) proche du manche de l'instrument, à l'angle d'ouverture de sa partie antérieure (D₃ - D₉) proche de la pointe de l'instrument, **caractérisé par le fait que** cette tige est constituée par un corps de révolution dont la génératrice est une ligne brisée comportant au moins deux tronçons rectilignes formant un angle entre eux.

2. Instrument suivant la revendication 1, **caractérisé par le fait que** sa partie active est formée d'au moins deux tronçons de conicité différente, l'angle d'ouverture de ces deux tronçons allant en croissant de l'extrémité antérieure de ladite partie active en direction de son extrémité postérieure.

3. Instrument suivant la revendication 1, **caractérisé par le fait que** sa partie terminale antérieure, démunie d'arête de coupe, présente au moins une gorge hélicoïdale à lèvre non coupante destinée à l'évacuation des déchets du matériel dentinaire détaché par l'instrument au cours du travail de celui-ci.

## Patentansprüche

1. Instrument für die Bohrung der Zahnwurzelkanäle, welches eine verjüngte Stange (1) aufweist, die, auf mindestens einem Teil ihrer Länge (L), der ihren aktiven Teil darstellt, mindestens eine spiralförmige, schneidende Kante besitzt, wobei diese Stange (1) eine Spitze und eine Konizität besitzt, deren Öffnungswinkel in ihrem hinteren Teil (D₉ - D₁₆) nahe am Griff des Instruments größer ist als der Öffnungswinkel in ihrem vorderen Teil (D₃ - D₉) nahe an der Spitze des Instruments, **dadurch gekennzeichnet, daß** diese Stange durch einen Umlaufkörper gebildet wird, dessen Mantellinie eine gebrochene Linie ist, die zumindest zwei geradlinige Abschnitte aufweist, welche untereinander einen Winkel bilden.

2. Instrument gemäß Anspruch 1, **dadurch gekennzeichnet, daß** sein aktiver Teil aus mindestens zwei Abschnitten verschiedener Konizität geformt ist, wobei der Öffnungswinkel dieser zwei Abschnitte von dem vorderen Ende des benannten aktiven Teils in Richtung seines hinteren Endes anwächst.

3. Instrument gemäß Anspruch 1, **dadurch gekennzeichnet, daß** sein vorderes Endstück, einer schneidenden Kante entbehrend, zumindest eine spiralförmige Verengung mit einer nicht schneidenden Kehle aufweist, die für die Abfuhr der Abfälle des vom Instrument im Laufe seiner Arbeit losgelösten Zahnmaterials geeignet ist.

## Claims

1. Instrument for the boring of the dental channels of the roots comprising a tapered bar (1) presenting, at least at one part of its length (L) constituting its active part, at least one helicoidal cutting edge, this bar (1) presenting a point and a conical shape the opening angle of which is bigger at its back part (D₉ - D₁₆) near the handle of the instrument than the opening angle at its front part (D₃ - D₉) near the point of the instrument, **characterised by** the fact that this bar is constituted by a body of revolution the side of which is a broken line comprising at least two rectilinear sections forming an angle between them.

2. Instrument according to claim 1, **characterised by** the fact that its active part is formed of at least two sections of different conical shape, the opening angle of these two sections increasing from the front end of said active part in the direction of its back end.

3. Instrument according to claim 1, **characterised by** the fact that its terminating front part, without a cutting edge, presents at least one helicoidal constriction with a non cutting lip adapted for the evacuation of waste of dental material detached by the instrument during its working process.
